# EUROPEAN PATENT APPLICATION

(11) **EP 4 318 434 A1**
(43) Date of publication of application: **07.02.2024**
(21) Application number: 21932953.9
(22) Date of filing: 24.03.2021
(51) Int. Cl.: G08G 1/09, G08G 1/0969, G01C 21/26

(54) **INFORMATION DISTRIBUTION SYSTEM**

(71) Applicant: MITSUBISHI ELECTRIC CORPORATION, Chiyoda-ku Tokyo 100-8310 (JP)
(72) Inventor: NISHIWAKI Takeshi, Tokyo 100-8310 (JP); TAKEYASU Masaaki, Tokyo 100-8310 (JP)
(74) Representative: Hoffmann Eitle
(86) International application number: PCT/JP2021/012143
(87) International publication number: WO 2022/201343

(57) **Abstract**

A vehicle ( 8 ) driving on a public road is on the way to entering a privately owned land. If map information about a local network area ( 9 ) is provided after the completion of authentication of the vehicle, time and effort will be required for the vehicle to enter the privately owned land. To solve such a problem, an information distribution system, includes: a local server ( 5 ) which authenticates in response to a connection request from the vehicle ( 8 ) moving inside of a public network area ( 7 ), and a local network base station ( 6 ) which provides map information about a local network area ( 9 ), to the vehicle ( 8 ) which is authenticated by the local server ( 5 ), wherein the local server ( 5 ) performs a pre-authentication, according to the connection request from the vehicle ( 8 ), when the vehicle ( 8 ) arrives at an authentication start point, located at a predetermined distance from the local network area ( 9 ), and the local network base station ( 6 ) provides the map information about the local network area ( 9 ) with the vehicle ( 8 ), before the vehicle ( 8 ) enters the local network area ( 9).

## Description

### TECHNICAL FIELD

The present disclosure relates to an information distribution system.

### BACKGROUND ART

Information distribution systems are used in various scenes. What is covered here is an information distribution system in the driving of a vehicle, and is a system which guides the driving of a vehicle by the use of a navigation device, based on the information about a host vehicle location, road map information, and the information about a guidance route so far as a destination.

In this driving guidance of a vehicle, what is provided as the road map information is the information about public roads ( henceforth, referred to as public road map information ), where some private roads are also included in the public roads. In contrast, the provision of information about privately owned lands ( henceforth, referred to as private map information ) is restricted.

For the purpose of guiding a traveling route from a public road to a destination point inside of a privately owned land, for example, in the Patent Document 1, a navigation device is proposed, which can carry out the routing assistance from a public road to a destination point inside of a privately owned land. The device is equipped with information capture means for capturing the private map information, including the institutional road information in a privately owned land area. The captured private map information and the public road map information are connected based on a common reference point, and a connecting point ( an entrance of a privately owned land ) with a principal road ( public road ) is searched for. In addition, routing assistance from the connecting point to a destination is performed based on the private map information which is supplied from the outside.

The connection between the public road map information and the private map information makes it possible to provide a vehicle with information for smoothly guiding the vehicle from a public road to a destination point inside of a privately owned land.

### CITATION LIST

### PATENT LITERATURE

Patent Document 1 : WO 2001 / 013067

### SUMMARY OF THE INVENTION

### TECHNICAL PROBLEM

However, a long time is required to carry out the connection between the communication means of a vehicle and the local network at a privately owned land side, when the communication means starts the acquisition of information about a privately owned land, at an approach time into the privately owned land. Then, time and effort will be required in guiding the vehicle which has already entered a privately owned land. In particular, when packages are delivered by automated driving, traffic congestion will be caused at the entrance of a privately owned land. In order to deal with those problems, it is necessary to provide each of the vehicles with the control for solving such a traffic congestion.

On the other hand, private map information regarding the inside of a privately owned land includes confidential information, such as institutional arrangement information, and traffic rules in a privately owned land. Then, it is required to enforce the confidentiality.

The present disclosure is made in order to solve the problems mentioned above. The purpose is to provide an information distribution system which is capable of performing smoothly the guidance of a vehicle from a public road to a privately owned land, maintaining the confidentiality of the network at a privately owned land side.

### SOLUTION TO PROBLEM

An information distribution system which is disclosed in the present disclosure includes:
a local server which authenticates in response to a connection request from a vehicle moving inside of a public network area, and
a local network base station which provides map information about a local network area, to the vehicle which is authenticated by the local server,
wherein the local server performs a pre-authentication, according to the connection request from the vehicle, when the vehicle arrives at an authentication start point, located at a predetermined distance from the local network area, and
the local network base station provides the map information with the vehicle, before the vehicle enters the local network area.

### ADVANTAGEOUS EFFECTS OF THE INVENTION

In the information distribution system according to the present disclosure, map information is provided in advance to a vehicle which is on the way to entering a local network area from a public network area. Thereby, the information distribution system has an effect to enable the smooth switching, in connection with the distribution of information.

### BRIEF EXPLANATION OF THE DRAWINGS

Fig. 1 is a block diagram showing the configuration of the information distribution system according to the Embodiment 1.
Fig. 2 is an operation sequence diagram according to the Embodiment 1.
Fig. 3 is a block diagram showing the relationship among a local network base station, a local server, and a vehicle, according to the Embodiment 1.
Fig. 4 is an operation sequence diagram according to the Embodiment 1.
Fig. 5 is a block diagram showing the relationship between the local server and the vehicle, according to the Embodiment 1.
Fig. 6 is an operation sequence diagram according to the Embodiment 1.
Fig. 7 is a block diagram showing the configuration of the information distribution system according to the Embodiment 2.
Fig. 8 is a first operation sequence diagram according to the Embodiment 2.
Fig. 9 is a second operation sequence diagram according to the Embodiment 2.
Fig. 10 is an operation sequence diagram according to the Embodiment 3.
Fig. 11 is an operation sequence diagram according to the Embodiment 4.
Fig. 12 is a diagram for explaining the combining of maps according to the Embodiment 4.
Fig. 13 is a hardware block diagram of a control device.

### DESCRIPTION OF EMBODIMENTS

### Embodiment 1

### ( Pre-acquisition of information about a local network area )

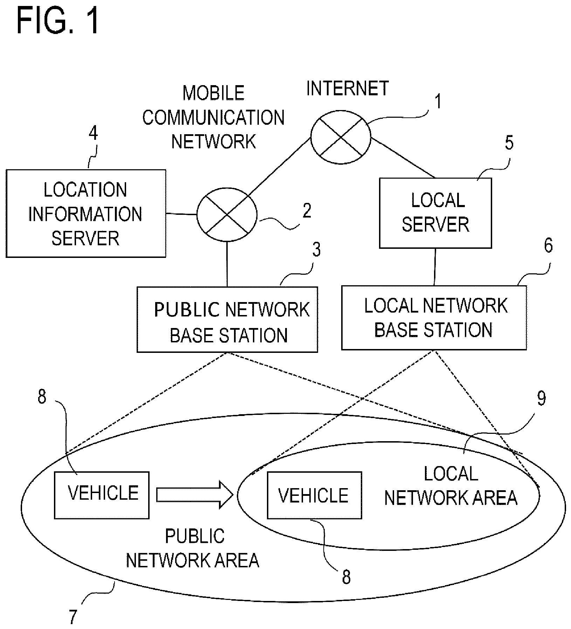

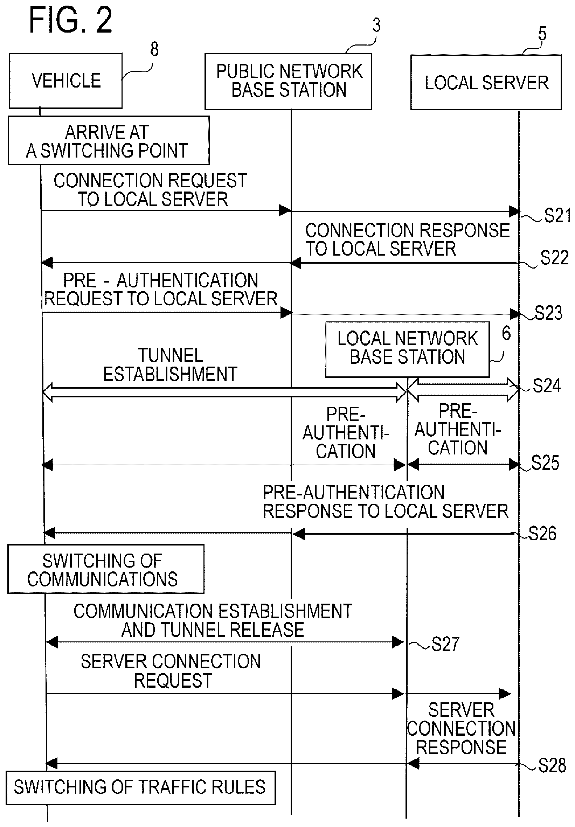

The configuration of an information distribution system according to the Embodiment 1 is shown in Fig. 1. Moreover, the operation sequence of this information distribution system is shown in Fig. 2. It is worth noticing that, each of the same symbols in the following drawings shows the same or corresponding portion.

As shown in Fig. 1, the information distribution system is constituted of a mobile communication network 2 and a public network base station 3, both of which are connected to the Internet 1; a location information server 4 which is connected to the mobile communication network 2; and a local server 5 and a local network base station 6, both of which are connected to the Internet 1.

A vehicle 8 is inside of a public network area 7 in which information is provided through the public road map information and the like. The public network base station 3 provides the vehicle 8 with information necessary for driving inside of the public network area 7. The location information server 4 provides the vehicle 8 with the location information for performing a switching of communications. The local server 5 carries out the authentication of the vehicle 8. The local network base station 6 provides information necessary for driving through a local network area 9, which is inside of a confidentially treated privately owned land, to the vehicle which is authenticated by the local server 5.

Next, operations will be explained according to the operation sequence diagram of Fig. 2. Outside of the local network area 9, the vehicle 8 acquires the information about a switching point, via the location information server 4. And, if the location of the vehicle 8 agrees with the switching point, the vehicle will transmit a connection request to the local server 5, via the public network base station 3 ( Step S21 ). Here, it is worth noticing that, a point away from the entrance of a privately owned land is set up as a switching point ( authentication start point ), when there is a vehicle 8 which is on the way to entering the local network area 9. Regarding the switching point, a distance needed for processing is defined from a general driving speed. The distance is based on the total time of a time which is required for a vehicle to move toward the entrance of a privately owned land, and a time which is required for the authentication of a vehicle.

The local server 5, when receiving the connection request, transmits a connection response to the vehicle 8 ( Step S22 ). The vehicle 8, when receiving the connection response, transmits a pre-authentication request to a local network, to the local server 5 ( Step S23 ). The local server 5, when receiving the pre-authentication request, establishes a tunnel ( virtual connection ) between the local network base station 6 and the vehicle 8 ( Step S24 ), and the vehicle 8 and the local network base station 6 perform a pre-authentication via the tunnel ( Step S25 ). After that, the local server 5 responds to the vehicle 8 with a result about the pre-authentication ( Step S26).

When the vehicle 8 enters the inside of the local network area 9 from the public network area 7, the vehicle establishes the communication with the local network base station 6 ( the communication with the public network base station 3 is switched to the communication with the local network base station 6 ). In addition, the vehicle releases the tunnel which is constructed outside of the local network area 9 ( Step S27 ). After that, the vehicle 8 requests the connection with the local server 5 via the local network base station 6 ( Step S27 ). When the response is offered from the local server 5 ( Step S28 ), the connection between the vehicle 8 and the local server 5 will be established.

When this connection is established, the vehicle 8 will acquire, from the local server 5, the private map information ( narrow area map information ), which includes the information necessary for driving inside of the local network area 9. In addition, he vehicle 8 switches the public road map information provided from the public network base station 3 to the private map information which is acquired from the local server 5, where the public road map information includes information such as traffic rules.

In this way, the information distribution system can obtain the following effects. When the vehicle 8 approaches a privately owned land, and arrives at a predetermined switching point, it becomes possible to perform a pre-authentication. Further, the confidentiality of information in the local network area 9 can be improved, while the quick switching regarding the information distribution is carried out between the public network area 7 and the local network area 9.

### (Pre-authentication and tunnel establishment with the local network communication )

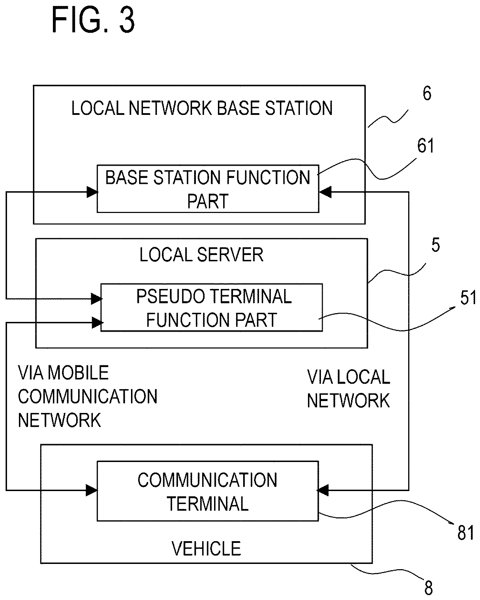

Fig. 3 shows a configuration in which a pseudo terminal function part 51 is installed inside of the local server 5, and authentication is carried out in advance. As shown in Fig. 3, communications are exchanged among a communication terminal 81 of the vehicle 8, a pseudo terminal function part 51 of the local server 5, and a base station function part 61 inside of the local network base station 6.

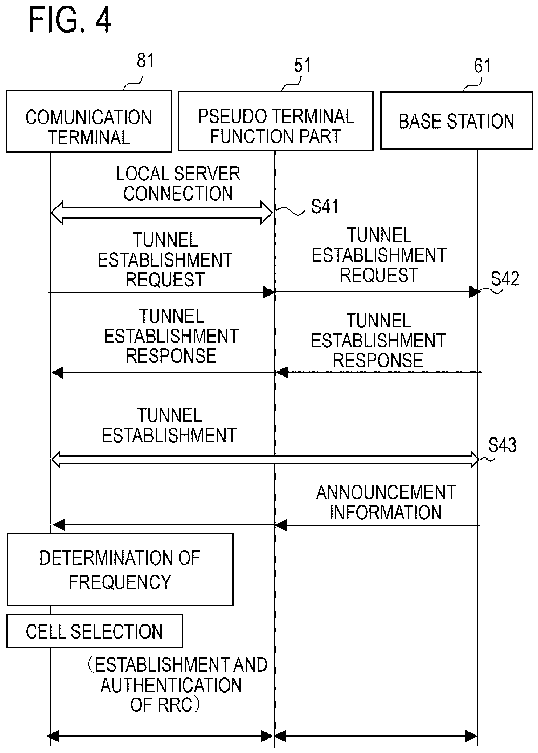

As shown in Fig. 4, after the authentication of the vehicle 8 is accepted, the connection with a local server is carried out between the communication terminal 81 of the vehicle 8, and the pseudo terminal function part 51 ( Step S41 ). When the base station function part 61 responds to a tunnel establishment request from the communication terminal 81 of the vehicle 8 ( Step S42 ), the tunnel connection between the communication terminal 81 and the base station function part 61 will be established ( Step S43 ).

According to this configuration, authentication function parts inside of the local server 5 can be unified. Then, it becomes possible to reduce the load of the local server 5.

### ( Connection source authentication of a local server: Prevention of tampering of location information )

The local server 5 performs pre-authentication in response to the authentication request from the vehicle 8. In addition to the authentication of the location information about the vehicle 8, the pre-authentication includes at least one authentication among the authentication of the communication terminal 81 linked to the local network base station 6, or the authentication of vehicle information ( vehicle identification number, car registration plate, driver name, and the like ).

According to this configuration, it becomes possible to verify the authentication partner easily, by adding not only the location information about the vehicle 8, but the information related to the vehicle 8.

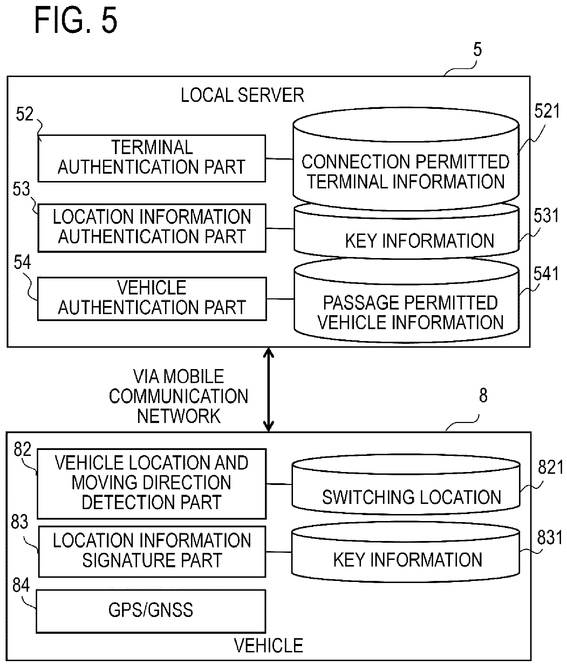

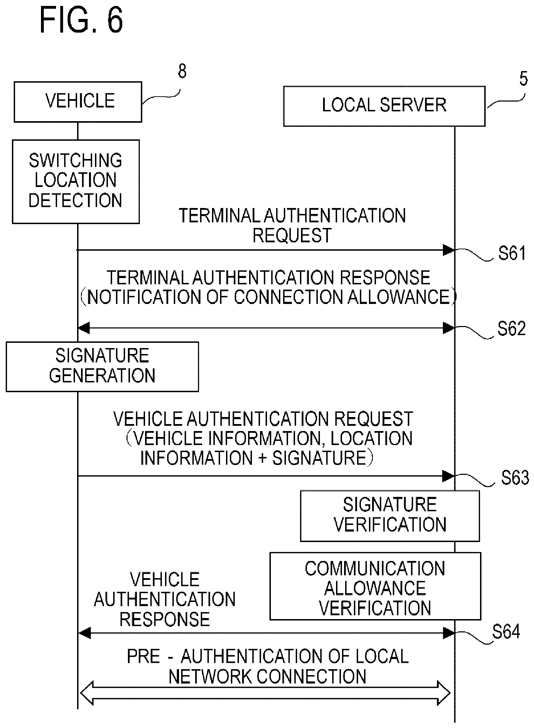

In order to confirm that the authentication request from the vehicle 8 is correct, this information distribution system is equipped with the configuration which is shown in Fig. 5. Moreover, the information distribution system performs the operation sequence which is shown in Fig. 6.

As shown in Fig. 5, the local server 5 is equipped with a terminal authentication part 52, a location information authentication part 53, and a vehicle authentication part 54. The terminal authentication part 52 has the connection permitted terminal information 521. The location information authentication part 53 has the key information 531. The vehicle authentication part 54 has the passage permitted vehicle information 541. Moreover, the vehicle 8 is equipped with a vehicle location and moving direction detection part 82, a location information signature part 83, and a GPS / GNSS 84. The vehicle location and moving direction detection part 82 has the switching location 821, and the location information signature part 83 has the key information 831.

As shown in Fig. 6, when the vehicle 8 arrives at a switching location which is memorized in advance, and the traveling direction is within the range of directions which are memorized in advance, the vehicle 8 requests a pre-authentication to the local server 5 ( Step S61 ). In response to the request, a terminal authentication response ( notification of connection allowance ) is sent from the local server 5 ( Step S62 ).

In an authentication request, location information is transmitted using the key information. The vehicle 8 gives a signature to the location information, and transmits it ( Step S63 ). In the local server 5, the signature information is verified. When the signature is correct, and in addition, the received location information about the vehicle 8 is within the range where the switch to the local server 5 is permitted, authentication and mediation are carried out in advance, between the communication terminal 81 of the vehicle 8 and the local network base station 6.

When verifying the location information about the vehicle 8, the local server 5 enquires the location information about the communication terminal 81 of the vehicle 8, from the location information server 4 of the mobile communication network 2. If the location information detected by the GPS-GNSS and notified from the communication terminal 81, and the location information about a result of the enquiry from the location information server 4 are within a predetermined error range, the local server will judge that the location information about the vehicle 8 is valid.

And, as a result, if there is no problem, a vehicle authentication response will be performed (Step S63).

According to this configuration, the generation of an authentication request is restricted. Then, the amount of communications concerning the authentication and the load on the local server 5 which performs the authentication can be reduced.

### Embodiment 2

### ( Authentication of the connection source of a local server)

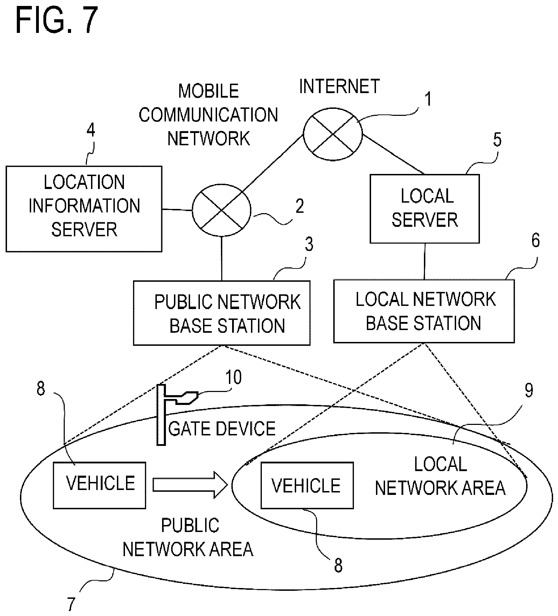

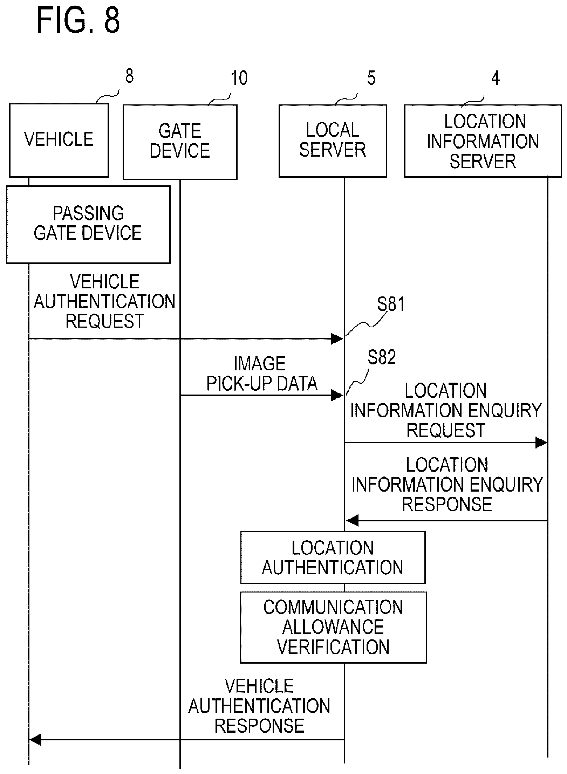

As the means to confirm that the vehicle 8 is valid, means different from the Embodiment 1 will be explained. In the information distribution system which is shown in Fig. 7, a gate device 10 is arranged on the road before entering the local network area 9 ( privately owned land ). The operation sequence diagram of this information distribution system is shown in Fig. 8.

The vehicle 8 sends a vehicle authentication request to the local server 5 ( Step S81 ), and, regardless of the communication with the communication terminal 81 of the vehicle 8, the gate device 10 acquires the vehicle information about the vehicle 8, and notifies it to the local server 5 ( Step S82 ). As shown in Fig. 8, this acquisition and notification of the vehicle information by the gate device 10 can be performed by the transmission of image pick-up data.

The local server 5 confirms that the vehicle information notified from the vehicle 8 and the vehicle information notified from the gate device 10 are in agreement. When the local server judges that the location information about the vehicle 8 and the vehicle information about the vehicle 8 are valid, the local server performs a pre-authentication ( Step S83 ).

According to this configuration, the validity of an authentication partner is confirmed by the agreement in vehicle information. Then, the false recognition due to spoofing can be prevented.

Moreover, in some embodiments, the gate device 10 may be installed just in front of a place to enter the local network area 9 ( in front of the distance, determined by supposing a driving distance during an authentication time ). Here, the vehicle 8 has the means to detect the vehicle passing the gate device 10. The system can be configured so that, a vehicle authentication request may be automatically transmitted from the vehicle 8, after a predetermined time is elapsed, from the time when the vehicle 8 passes the gate device 10.

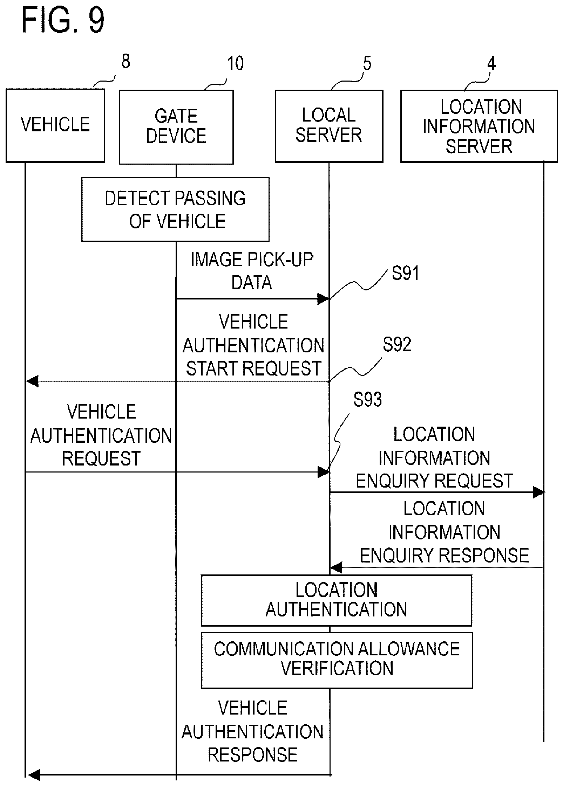

Moreover, an operation sequence diagram is shown in Fig. 9, to illustrate another embodiment. When the local server 5 receives the vehicle information ( image pick-up data ) from the gate device 10 ( Step S91 ), a vehicle authentication start request may be transmitted to the vehicle 8 ( Step S92 ). In response to the request, a pre-authentication request may be transmitted from the vehicle 8 ( Step S93 ).

According to this configuration, it becomes possible to prevent an erroneous operation of the vehicle 8, to fail the transmission of the vehicle authentication request.

Moreover, when the vehicle information from the gate device 10 is not delivered, in response to the vehicle authentication request from the vehicle 8, the image pick-up data by the gate device 10 will be retroacted. The vehicle 8 is specified, and operations to confirm the vehicle information is performed. Thereby, authentication processing can be smoothly carried out.

### Embodiment 3

### ( Grant of right to access the limited information within a local network )

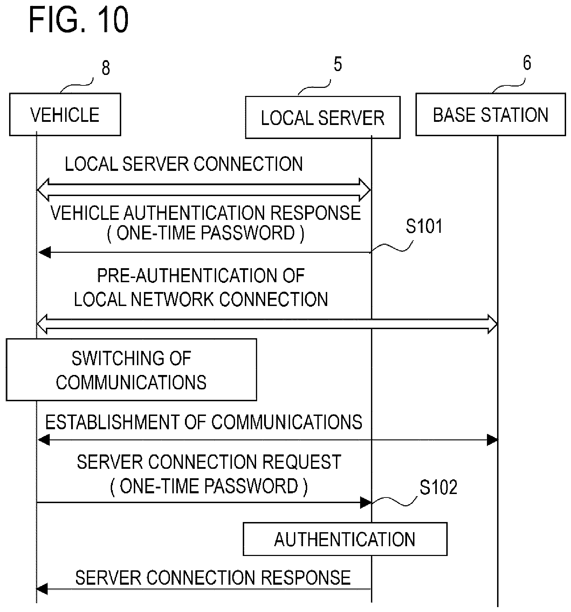

Fig. 10 is an operation sequence diagram illustrating an example of using a one-time password, for accessing the information limited within a local network.

One-time password is contained in a vehicle authentication response, which is used at the time when authentication is carried out between the vehicle 8 and the local server 5. In addition, communications are switched from the state where the vehicle drives through a public network area 7, to the state where the vehicle drives through a local network area 9. The authentication is carried out using the one-time password, at the time when the authentication of a connection request to the local server 5 is carried out. Here, the one-time password is a password which is set to be valid only for a time, which is expected to be required for a vehicle to move from the location of the vehicle 8 to the entrance of the local network area 9.

As shown in Fig. 10, regarding the connection between the vehicle 8 and the local server 5, after connections are completed, a one-time password for accessing the limited information within a local network is notified from the local server 5 to the vehicle 8, where the password is embedded in a vehicle authentication response (Step S101 ). The vehicle 8 notifies the one-time password to the local server 5 ( Step S102 ). When the local server 5 completes the authentication using the one-time password, a server connection response will be performed ( Step S103 ), and the communication between the vehicle 8 and the local server 5 is established.

According to this configuration, time required for the authentication by the local server 5 can be reduced. Then, information can be acquired smoothly.

Moreover, the one-time password is valid only for a limited time. Then, the improper use and falsification of the one-time password which is acquired illegally can be prevented.

### Embodiment 4

### ( Pre-distribution of map information )

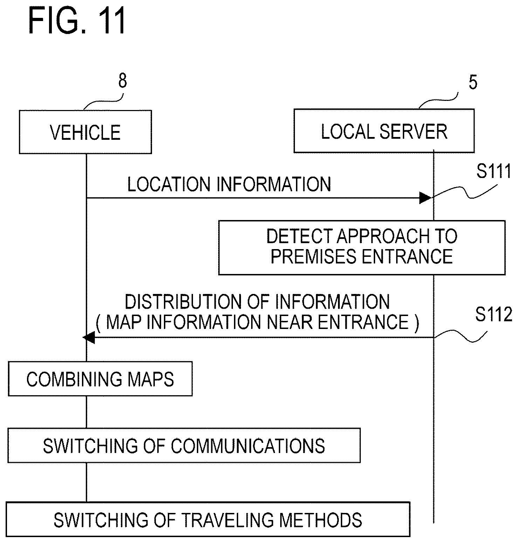

Fig. 11 shows an operation sequence, for providing the vehicle 8 with the private map information 11 ( narrow area map information ) which is held by the local server 5. In particular, the drawing shows an example for setting up a driving path, which is from the current location of the vehicle 8, via the passage of the entrance of a privately owned land, and to a destination point. Here, the vehicle 8 acquires the private map information 11 before entering the local network area 9, and combines it with the public road map information 12, to have the driving path.

As shown in Fig. 11, the vehicle 8 is located out of the local network area 9, and is notifying the location information to the local server 5 ( Step S111 ). When the vehicle 8 approaches the entrance of the local network area 9 from the notified location, the local server 5 distributes the private map information 11 about the neighborhood of the entrance ( narrow area map information ), to the vehicle 8 ( Step S112 ). The vehicle 8 combines the distributed private map information 11 ( narrow area map information ) and the public road map information 12, and uses it for the selection of a driving route.

Typically, the details of the private map information 11 are not included in the public road map information 12. For this reason, even if simply both of the public road map information 12 and the private map information 11 are obtained, there arises a case where the entry to a privately owned land is not carried out smoothly, because the entrance of a privately owned land is not always opened to a public road.

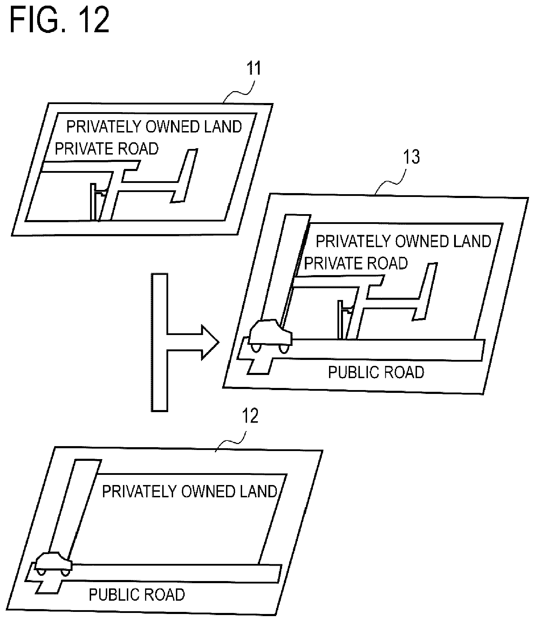

For this reason, in the present Embodiment, as shown in Fig. 12, the current location of the vehicle 8 can be confirmed on the map information ( composite map information 13 ), where the public road map information 12 and the private map information 11 are combined. Then, it becomes possible to choose an optimal driving route, and set up the driving route from the entrance of a privately owned land, to a destination point.

Furthermore, in some embodiments, a road side device may be installed at the neighborhood of the entrance of the local network area 9. The road side device is configured to detect that the vehicle 8 is approaching the entrance of the local network area 9. When configured in this way, the information distribution system can detect that the vehicle 8 arrives at a location suitable for providing information. Then, the existence of the vehicle 8 can be confirmed more reliably.

There may be a case in which a road side device is installed for other purposes, such as fee collection in area entry. According to this configuration, it becomes possible to detect the vehicle 8, by adding a function to this road side device.

It is also possible to distribute the map information for distributing in advance to the vehicle 8 from the local server 5, according to the kinds of users. That is, only the entrance of a local network area and a window ( destination point ) for receiving a package will be displayed to a vehicle for simply delivering a package, and furthermore, other areas are not clearly shown. In addition, in some embodiments, the disclosed area by the private map information may be changed according to pre-registered users.

According to this configuration, unnecessarily delivery of information about a local network area which is not used by users can be prevented. Then, confidentiality will be improved.

Moreover, in some embodiments, all the private map information may be distributed, when the user belongs to the premises of a local network area.

According to this configuration, the destinations of information distribution in the local network area 9 are limited by registering them in advance. Precautionary measures for preventing the leakage of confidential information are already taken. Then, confidentiality can be improved.

Moreover, in some embodiments, only a required route among the private map information may be distributed, when the user is a temporary user.

According to this configuration, only a required route among the local information is distributed, and accessing of a temporary user to other sensitive information can be prevented. Then, confidentiality can be improved.

It is worth noticing that, all the data which are received inside of the local network area 9 are configured to be deleted, when the vehicle 8 leaves from the local network area 9. That is, when leaving from a privately owned land, the contents of information devices are checked, and the private map information which is acquired when entering the privately owned land is deleted. In this embodiment, the vehicle acquires private map information, set with a flag, and this flagged information will be deleted.

According to this configuration, it becomes impossible to take out the private map information from the vehicle 8 which has left the local network area 9. Then, confidentiality can be improved.

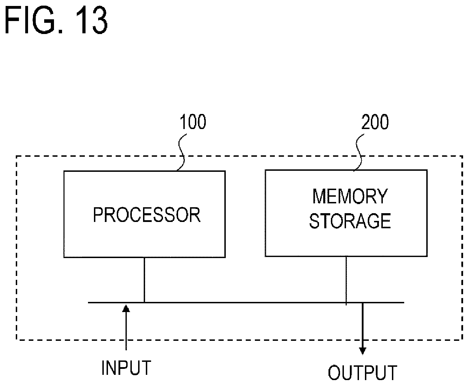

It is worth noticing that, the vehicle 8 used in the information distribution system of the present disclosure is equipped with a communication terminal 81, and its function is controlled by a control device which is installed inside. An example of the hardware of this control device is shown in Fig. 13. This control device consists of a processor 100 and a memory storage 200. The memory storage 200 possesses volatile memory storages, such as random access memory, and auxiliary memory storages of non-volatile type, such as flash memory, but they are not illustrated. Moreover, the control device may be equipped with the auxiliary memory storages of hard disk type, instead of flash memory.

The processor 100 executes programs which are input from the memory storage 200, and, for example, the communication terminal 81 carries out communications between the communication terminal and the local server 5 or the local network base station 6. In this case, programs are input, from auxiliary memory storages, to the processor 100, via volatile memory storages. Moreover, the processor 100 may output the data of operation results and others, to the volatile memory storages of the memory storage 200, and may save the data in auxiliary memory storages, via the volatile memory storages. It is worth noticing that, the configuration of this hardware is the same with that of a control device installed inside of the local server 5, and a control device installed inside of the local network base station 6.

Although the present application is described above in terms of various exemplary embodiments and implementations, it should be understood that the various features, aspects and functionality described in one or more of the individual embodiments are not limited in their applicability to the particular embodiment with which they are described, but instead can be applied, alone or in various combinations to one or more of the embodiments. It is therefore understood that numerous modifications which have not been exemplified can be devised without departing from the scope of the present application. For example, at least one of the constituent components may be modified, added, or eliminated. At least one of the constituent components mentioned in at least one of the preferred embodiments may be selected and combined with the constituent components mentioned in another preferred embodiment.

### REFERENCE SIGNS LIST

1 Internet ; 2 Mobile Communication Network ; 3 Public Network Base Station ; 4 Location Information Server ; 5 Local Server ; 6 Local Network Base Station ; 7 Public Network Area ; 8 Vehicle ; 9 Local Network Area ; 10 Gate Device ; 11 Private Map Information ; 12 Public Road Map Information ; 13 Composite Map Information ; 51 Pseudo Terminal Function Part ; 52 Terminal Authentication Part ; 521 Connection Permitted Terminal Information ; 53 Location Information Authentication Part ; 531 Key Information ; 54 Vehicle Authentication Part ; 541 Passage Permitted Vehicle Information ; 61 Base Station Function Part ; 81 Communication Terminal ; 82 Vehicle Location and Moving Direction Detection Part ; 821 Switching Location ; 83 Location Information Signature Part ; 831 Key Information ; 84 GPS / GNSS ; 100 Processor ; 200 Memory Storage

## Claims

1. An information distribution system, comprising:
a local server which authenticates in response to a connection request from a vehicle moving inside of a public network area, and
a local network base station which provides map information about a local network area, to the vehicle which is authenticated by the local server,
wherein the local server performs a pre-authentication, according to the connection request from the vehicle, when the vehicle arrives at an authentication start point, located at a predetermined distance from the local network area, and
the local network base station provides the map information with the vehicle, before the vehicle enters the local network area.

2. The information distribution system as claimed in Claim 1,
wherein the pre-authentication of the vehicle is performed between a pseudo terminal function part installed in the local server, and a communication terminal installed in the vehicle, and
the pseudo terminal function part establishes a tunnel connection between the communication terminal and the local network base station.

3. The information distribution system as claimed in Claim 1,
wherein the pre-authentication by the local server includes an authentication of location information about the vehicle, and at least one authentication of an authentication of a communication terminal installed in the vehicle or an authentication of vehicle information notified from the vehicle.

4. The information distribution system as claimed in Claim 3,
wherein the vehicle requests an authentication to the local server, when the vehicle arrives at the authentication start point memorized in the vehicle, and furthermore, a traveling direction of the vehicle is the direction memorized in the vehicle.

5. The information distribution system as claimed in Claim 3,
wherein the pre-authentication by the local server is carried out, when a signature is given to the location information about the vehicle, and the local server verifies the signature, and if the signature is correct, and furthermore, the location information about the vehicle is within a predetermined area.

6. The information distribution system as claimed in Claim 3,
wherein the local server enquires the location information about the communication terminal, from a location information server of a mobile communication network, when verifying the location information about the vehicle, and
if the location information notified from the communication terminal and the location information about a result of the enquiry are within a predetermined error range, the local server judges that the location information about the vehicle is valid.

7. The information distribution system as claimed in Claim 3,
wherein a gate device which acquires the vehicle information about the vehicle is installed on a road following the local network area, and
the local server judges that the location information and the vehicle information are valid, when the vehicle information notified from the vehicle and the vehicle information acquired by the gate device are in agreement.

8. The information distribution system as claimed in Claim 7,
wherein the vehicle is equipped with means to detect the vehicle passing the gate device, and
the connection request is transmitted from the vehicle to the local server, after a predetermined time is elapsed from the time when the vehicle passes the gate device.

9. The information distribution system as claimed in Claim 7,
wherein the local server transmits a vehicle authentication start request to the vehicle, when the vehicle information is notified from the gate device to the local server.

10. The information distribution system as claimed in Claim 1,
wherein the local server notifies the vehicle a one-time password for accessing information limited within the local network, in response to the connection request from the vehicle to the local server, and
the vehicle establishes communication with the local server by the one-time password.

11. The information distribution system as claimed in Claim 10,
wherein a validity period of the one-time password is set based on a time, which is expected to be required for the vehicle to move from a current location to the local network area.

12. The information distribution system as claimed in Claim 1,
wherein the map information which is provided to the vehicle before entering the local network area includes map information about an entrance of the local network area.

13. The information distribution system as claimed in Claim 12,
wherein a road side device is installed near the entrance of the local network area, and
the local network base station starts distribution of the map information, when the vehicle is detected by the road side device.

14. The information distribution system as claimed in Claim 1,
wherein the map information which is provided to the vehicle on a way to entering the local network area is changed in contents, according to users.

15. The information distribution system as claimed in Claim 1,
wherein the provided map information is deleted, when the vehicle leaves the local network area.
